# EUROPEAN PATENT APPLICATION

(11) **EP 4 756 888 A1**
(43) Date of publication of application: **10.06.2026**
(21) Application number: 25797670.4
(22) Date of filing: 25.04.2025
(51) Int. Cl.: H01M 4/04, H01M 10/04, H01M 4/02

(54) **SECONDARY BATTERY MANUFACTURING EQUIPMENT AND METHOD FOR MANUFACTURING SECONDARY BATTERY USING SAME**

(30) Priority: 30.04.2024 KR 20240057942; 10.04.2025 KR 20250046622
(71) Applicant: LG Energy Solution, Ltd., Seoul 07335 (KR)
(72) Inventor: CHOI, Min Hyuck, Daejeon 34122 (KR); MOON, Young Gyu, Daejeon 34122 (KR); KIM, Min Cheol, Daejeon 34122 (KR); PARK, Min Gu, Daejeon 34122 (KR)
(74) Representative: Plasseraud IP
(86) International application number: PCT/KR2025/005622
(87) International publication number: WO 2025/230232

(57) **Abstract**

According to exemplary embodiments, a method for manufacturing a secondary battery is provided. The method includes applying a first electrode slurry to the current collector sheet such that active guide lanes are formed on the current collector sheet; applying a second electrode slurry to the current collector sheet such that an electrode slurry lane is formed between the active guide lanes; and drying the active guide lanes and the electrode slurry lane such that an active material layer is formed, wherein the solid content of the first electrode slurry is different from the solid content of the second electrode slurry.

## Description

### [Technical Field]

The present disclosure relates to a secondary battery manufacturing facility and a method for manufacturing a secondary battery using the same. This application claims the benefit of priority from Korean Patent Application No. 10-2025-0046622, filed on April 10, 2025, the entire contents disclosed therein are incorporated by reference into this disclosure. Korean Patent Application No. 10-2025-0046622 is a refiled application that claims the benefit of priority from Korean Patent Application No. 10-2024-0057942, filed on April 30, 2024.

### [Background]

Unlike primary batteries, secondary batteries can be charged and discharged multiple times. Secondary batteries are widely used as energy sources for various wireless devices such as handsets, laptops, wireless vacuum cleaners, etc. Recently, due to energy density improvements and economies of scale, the manufacturing cost per unit capacity of secondary batteries has dramatically decreased, and as the cruising distance of BEVs (battery electric vehicles) has increased to a level equivalent to fuel vehicles, the primary applications of secondary batteries are shifting from mobile devices to mobility.

Secondary batteries are manufactured through an electrode process, an assembly process and an activation process. Among them, the electrode process is the most essential process for determining the yield and performance of the battery cell. The electrode process may include a coating process, a roll pressing process, and a slitting process. In the coating process, active materials and insulating materials may be coated on the surface of the current collector. In the roll pressing process, the electrode may be pressed by pressing rolls. The roll pressing process may enhance the density, performance, and surface quality of the electrodes. In the slitting process, the electrodes may be cut into a plurality of electrodes according to the battery cell design. The slitting process is a selective process and may be omitted.

### [Summary]

### [Technical Problem]

The technical problem to be solved by the technical idea of the present disclosure is to provide a secondary battery manufacturing facility with enhanced yield and productivity and a method for manufacturing secondary battery using the same.

### [Technical Solution]

According to exemplary embodiments of the present disclosure to solve the above-mentioned problem, a method for manufacturing a secondary battery is provided. The method includes applying a first electrode slurry to a current collector sheet such that active guide lanes are formed on the current collector sheet; applying a second electrode slurry to the current collector sheet such that an electrode slurry lane is formed between the active guide lanes; and drying the active guide lanes and the electrode slurry lane such that an active material layer is formed, wherein a solid content of the first electrode slurry is different from a solid content of the second electrode slurry.

The solid content of the first electrode slurry is smaller than the solid content of the second electrode slurry.

The solid content of the first electrode slurry is greater than the solid content of the second electrode slurry.

A wet thickness of each of the active guide lanes is different from a wet thickness of the electrode slurry lane.

The wet thickness of each of the active guide lanes is smaller than the wet thickness of the electrode slurry lane.

The wet thickness of each of the active guide lanes is greater than the wet thickness of the electrode slurry lane.

The product of the wet thickness of each of the active guide lanes and the solid content of each of the active guide lanes is identical to the product of the wet thickness of the electrode slurry lane and the solid content of the electrode slurry lane.

The method further includes applying insulating slurry to the current collector sheet such that insulating slurry lanes are formed on the active guide lanes.

By drying the active guide lanes and the electrode slurry lane, the active guide lanes and the electrode slurry lane are integrated into the active material layer.

A dry thickness of each of the active guide lanes is identical to a dry thickness of the electrode slurry lane.

The time interval between formation of the active guide lanes and drying of the active guide lanes is within 2 minutes.

The solid content of each of the active guide lanes is 40% or more, the solid content of each of the active guide lanes is 60% or less, the solid content of the electrode slurry lane is 60% or more, and the solid content of the electrode slurry lane is 80% or less.

### [Advantageous Effects]

According to exemplary embodiments of the present disclosure, active guide lanes that confine an electrode slurry lane may be provided. Accordingly, fat edge and slide of the electrode slurry lane can be mitigated or prevented, and the yield and reliability of secondary battery manufacturing can be enhanced.

The effects that can be obtained in exemplary embodiments of the present disclosure are not limited to the above-described effects, and other effects not mentioned can be clearly derived and understood by a person having ordinary knowledge in the art from the following description. In other words, unintended effects of implementing the exemplary embodiments of the present disclosure may also be derived from the exemplary embodiments of the present disclosure by a person having ordinary knowledge in the art.

### [Brief Description of the Drawings]

FIG. 1 illustrates a secondary battery manufacturing facility according to exemplary embodiments.
FIG. 2 is a plan view illustrating processing by a secondary battery manufacturing facility according to exemplary embodiments.
FIG. 3 is a cross-sectional view taken along the cut line 2I-2I' of FIG. 2.
FIG. 4 is a cross-sectional view taken along the cut line 2II-2II' of FIG. 2.
FIG. 5 is a cross-sectional view taken along the cut line 2III-2III' of FIG. 2.
FIG. 6 is a cross-sectional view taken along the cut line 2IV-2IV' of FIG. 2.
FIG. 7 is a flowchart to describe a method for manufacturing a secondary battery according to exemplary embodiments.
FIG. 8 is a plan view illustrating processing by a secondary battery manufacturing facility according to exemplary embodiments.
FIG. 9 is a cross-sectional view taken along the cut line 8I-8I' of FIG. 8.
FIG. 10 is a cross-sectional view taken along the cut line 8II-8II' of FIG. 8.
FIG. 11 is a cross-sectional view taken along the cut line 8III-8III' of FIG. 8.
FIG. 12 is a cross-sectional view taken along the cut line 8IV-8IV' of FIG. 8.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (first embodiment)

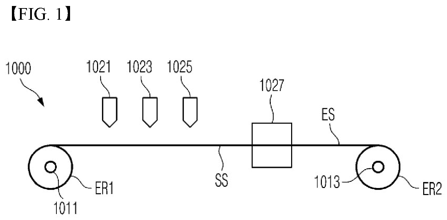

FIG. 1 illustrates a secondary battery manufacturing facility 1000 according to exemplary embodiments.

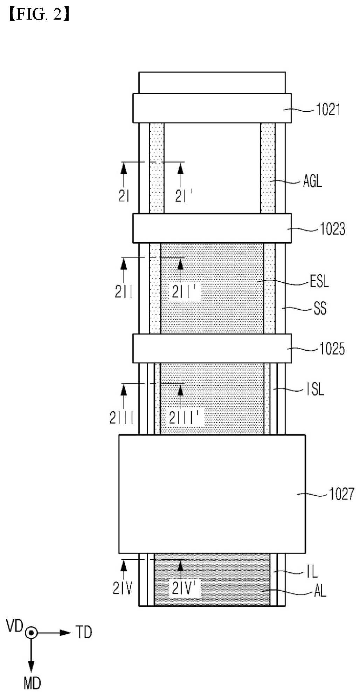

FIG. 2 is a plan view illustrating processing by a secondary battery manufacturing facility 1000 according to exemplary embodiments.

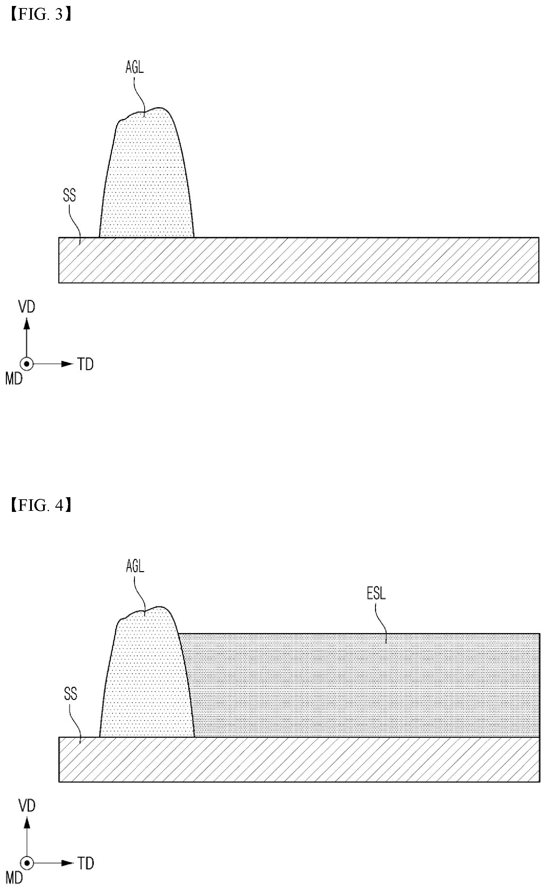

FIG. 3 is a cross-sectional view taken along the cut line 2I-2I' of FIG. 2.

FIG. 4 is a cross-sectional view taken along the cut line 2II-2II' of FIG. 2.

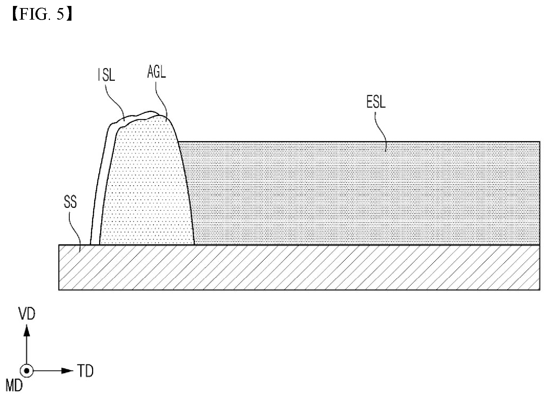

FIG. 5 is a cross-sectional view taken along the cut line 2III-2III' of FIG. 2.

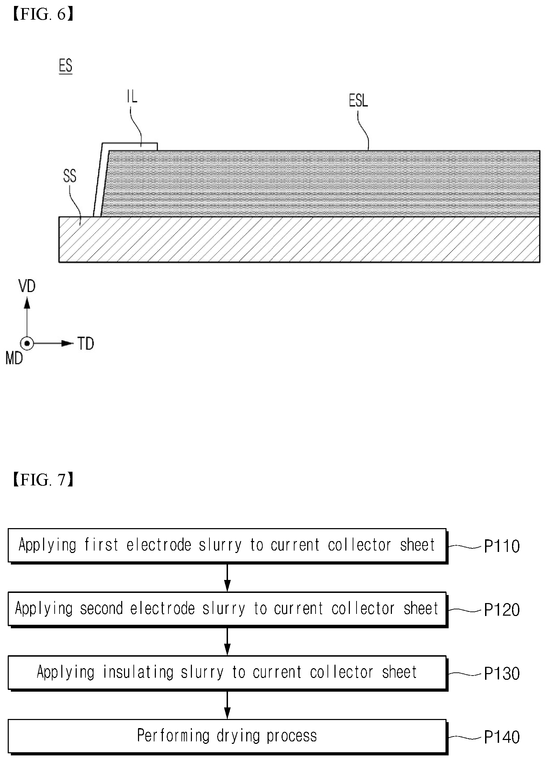

FIG. 6 is a cross-sectional view taken along the cut line 2IV-2IV' of FIG. 2.

Referring to FIG. 1 to FIG. 5, the secondary battery manufacturing facility 1000 may include an unwinder 1011, a rewinder 1013, a first die coater 1021, a second die coater 1023, a third die coater 1025, and a drying device 1027.

A first electrode roll ER1 may be loaded onto the unwinder 1011. The unwinder 1011 may be configured to unwind a current collector sheet SS from the first electrode roll ER1. As the current collector sheet SS is processed by the first to third die coaters 1021, 1023, 1025 and the drying device 1027, an electrode sheet ES may be provided.

The rewinder 1013 may be configured to wind the electrode sheet ES into a second electrode roll ER2. After reaching a predetermined winding amount target, the second electrode roll ER2 may be cut and separated from the electrode sheet ES. Accordingly, the current collector sheet SS and the electrode sheet ES may move between the unwinder 1011 and the rewinder 1013, and processing by the secondary battery manufacturing facility 1000 may be referred to as roll-to-roll processing.

The moving direction of the current collector sheet SS and the electrode sheet ES is referred to as a machine direction MD. The machine direction MD may also be referred to as the longitudinal direction of the current collector sheet SS and the electrode sheet ES. A direction perpendicular to the machine direction MD is defined as a transverse direction TD of the current collector sheet SS and the electrode sheet ES. The transverse direction TD may also be referred to as the width direction of the current collector sheet SS and the electrode sheet ES. A vertical direction VD may be substantially perpendicular to the machine direction MD and the transverse direction TD.

The thickness of the current collector sheet SS may range from about 3 µm to about 500 µm. The current collector sheet SS may not cause chemical changes in the finally manufactured secondary battery and may have high conductivity. The surface of the current collector sheet SS may include a fine uneven structure for enhancing adhesion of active materials. The shape of the current collector sheet SS may include any one of film, sheet, foil, net, porous, foam, and nonwoven fabric.

According to exemplary embodiments, the current collector sheet SS may be used for manufacturing a positive electrode, and the current collector sheet SS may include any one of stainless steel, aluminum, nickel, titanium, calcined carbon, and aluminum-cadmium alloy, but is not limited thereto.

For example, the current collector sheet SS may also be used for manufacturing a negative electrode, and the current collector sheet SS may include any one of copper, stainless steel, aluminum, nickel, titanium, calcined carbon, and aluminum-cadmium alloy.

The first die coater 1021 may be configured to apply a first electrode slurry to the current collector sheet SS such that active guide lanes AGL are formed. The active guide lanes AGL may extend in the machine direction MD. The active guide lanes AGL may be spaced apart from each other in the transverse direction TD. In this example, each of the active guide lanes AGL may be adjacent to edges of the current collector sheet ES in the transverse direction TD.

According to exemplary embodiments, the first electrode slurry may include electrode active materials, conductive materials, binders, and solvents. Electrode slurry may be manufactured by dissolving electrode active materials, conductive materials, and the like in solvents. The solvent may disperse components of the electrode slurry such as electrode active materials. The solvent may be an aqueous solvent or a non-aqueous solvent. The solvent may include any one of dimethyl sulfoxide (DMSO), isopropyl alcohol, N-methyl-2-pyrrolidone (NMP), acetone, water, and mixtures thereof.

According to exemplary embodiments, the electrode active material may be a positive electrode active material, but is not limited thereto. The positive electrode active material is a material capable of causing electrochemical reactions. The positive electrode active material may be a lithium transition metal oxide. The positive electrode active material may include layered compounds such as lithium cobalt oxide (LiCoO₂) and lithium nickel oxide (LiNiO₂) substituted with one or more transition metals; lithium manganese oxide substituted with one or more transition metals; lithium nickel-based oxide represented by the formula LiNi_{1-y}M_{y}O₂ (where M is any one of Co, Mn, Al, Cu, Fe, Mg, B, Cr, Zn, and Ga, and 0.01≤y≤0.7); lithium nickel cobalt manganese composite oxide represented by Li_{1+z}Ni_{b}Mn_{c}Co_{1-(b+c+d)}M_{d}O₍₂₋ₑ₎Aₑ (where -0.5≤z≤0.5, 0.1≤b≤0.8, 0.1≤c≤0.8, 0≤d≤0.2, 0≤e≤0.2, b+c+d<1, M is any one of Al, Mg, Cr, Ti, Si, and Y, and A is any one of F, P, and Cl) such as Li_{1+z}Ni_{1/3}Co_{1/3}Mn_{1/3}O₂ and Li_{1+z}Ni_{0.4}Mn_{0.4}Co_{0.2}O₂. The positive electrode active material may include olivine-based lithium metal phosphate represented by the formula Li₁₊ₓM_{1-y}M'_{y}PO_{4-z}X_{z} (where M is a transition metal, more specifically any one of Fe, Mn, Co, and Ni, M' is any one of Al, Mg, and Ti, X is any one of F, S, and N, -0.5≤x≤+0.5, 0≤y≤0.5, and 0≤z≤0.1).

Additionally, the electrode active material may also be a negative electrode active material. The negative electrode active material may include, for example, carbon such as non-graphitizable carbon and graphite-based carbon. The negative electrode active material may include, for example, metal composite oxides such as LiₓFe₂O₃ (0≤x≤1), LixWO₂ (0≤x≤1), SnₓMe₁₋ₓMe'_{y}O_{z} (where Me is any one of Mn, Fe, Pb, and Ge, Me' is any one of Al, B, P, Si, Group 1, 2, 3 elements of the periodic table, and halogens; 0<x≤1; 1≤y≤3; and 1≤z≤8). The negative electrode active material may include, for example, any one of lithium metal; lithium alloys; silicon-based alloys; and tin-based alloys. The negative electrode active material may include, for example, metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅. The negative electrode active material may also include, for example, conductive polymers such as polyacetylene and Li-Co-Ni-based materials.

The conductive material may have conductivity without causing chemical changes in the finally manufactured secondary battery. The conductive material may include, for example, graphite such as natural graphite or artificial graphite; carbon black such as acetylene black, ketjen black, channel black, furnace black, lamp black, and thermal black; conductive fibers such as carbon fiber or metal fiber; metal powders such as fluorinated carbon, aluminum, and nickel powder; conductive whiskers such as zinc oxide and potassium titanate; conductive metal oxides such as titanium oxide; and polyphenylene derivatives.

The binder may enhance adhesion between active materials and adhesion between the current collector sheet SS and active materials. The binder may include polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene butadiene rubber (SBR), and fluorine rubber.

The second die coater 1023 may be disposed downstream of the first die coater 1021. In other words, the second die coater 1023 may be configured to process portions of the current collector sheet SS processed by the first die coater 1021. The second die coater 1023 may be interposed between the first die coater 1021 and the rewinder 1013.

The second die coater 1023 may be configured to apply a second electrode slurry to the current collector sheet SS such that an electrode slurry lane ESL is formed. Portions of the current collector sheet SS to which the active guide lanes AGL and the electrode slurry lane ESL are applied may be referred to as coated parts. The electrode slurry lane ESL may extend in the machine direction MD.

The electrode slurry lane ESL may be interposed between the active guide lanes AGL in the transverse direction TD. In other words, the electrode slurry lane ESL may be applied on portions of the current collector sheet SS confined by the active guide lanes AGL.

The second electrode slurry may include electrode active materials, conductive materials, binders, and solvents. According to exemplary embodiments, the second electrode slurry may be different from the first electrode slurry. The second electrode slurry may have higher solid content than the first electrode slurry. The second electrode slurry may be substantially identical to the first electrode slurry except for the solid content. In other words, the first electrode slurry may include additional solvent compared to the second electrode slurry based on the same amount of solid content.

The solid content of the electrode slurry lane ESL may be different from the solid content of each of the active guide lanes AGL. The solid content of the electrode slurry lane ESL may be greater than the solid content of each of the active guide lanes AGL.

According to exemplary embodiments, the solid content of each of the active guide lanes AGL may be about 40% or more. According to exemplary embodiments, the solid content of each of the active guide lanes AGL may be about 45% or more. According to exemplary embodiments, the solid content of each of the active guide lanes AGL may be about 60% or less. According to exemplary embodiments, the solid content of each of the active guide lanes AGL may be about 55% or less.

According to exemplary embodiments, the solid content of the electrode slurry lane ESL may be about 60% or more. According to exemplary embodiments, the solid content of the electrode slurry lane ESL may be about 65% or more. According to exemplary embodiments, the solid content of the electrode slurry lane ESL may be about 80% or less. According to exemplary embodiments, the solid content of the electrode slurry lane ESL may be about 75% or less.

Due to the difference between the solid content of each of the active guide lanes AGL and the solid content of the electrode slurry lane ESL, the active guide lanes AGL and the electrode slurry lane ESL may not mix with each other until the drying process by the drying device 1027 is performed.

The time taken from providing the active guide lanes AGL and the electrode slurry lane ESL until they are dried may be 5 minutes or less (or 2 minutes or less). Accordingly, the profile of each of the active guide lanes AGL may be maintained the same as or similar to when each of the active guide lanes AGL was initially coated, so that slide of the electrode slurry lane ESL can be prevented or mitigated, and the edge profile of the finally provided active material layer AL can be enhanced.

According to exemplary embodiments, the wet thickness of the electrode slurry lane ESL may be different from the wet thickness of each of the active guide lanes AGL so that active materials are uniformly provided on the current collector sheet SS in the transverse direction TD. The wet thickness of the electrode slurry lane ESL may be smaller than the wet thickness of each of the active guide lanes AGL. Here, the wet thickness of the electrode slurry lane ESL and each of the active guide lanes AGL may be the thickness of the electrode slurry lane ESL and each of the active guide lanes AGL before drying.

The second electrode slurry may have fluidity. When coating conventional electrode slurry, fat edge and slide are formed by flow of the electrode slurry. Fat edge means an increase in thickness (or loading amount) of the transverse direction edges of the electrode slurry. In other words, fat edge may have a thickness (or loading amount) greater than the target thickness (or loading amount) of the electrode slurry. Slide is an inclination of the electrode slurry formed toward the ends of the electrode sheet ES in the transverse direction TD due to flow of the electrode slurry.

According to exemplary embodiments, by providing the active guide lanes AGL before coating the electrode slurry lane ESL, the profile of the active material layer AL provided by drying the electrode slurry lane ESL and the active guide lanes AGL can be enhanced, and accordingly, the quality of the finally manufactured electrode sheet ES can be enhanced. Here, improvement of the profile of the active material layer AL may include enhancement of the right angle due to removal or mitigation of fat edge and slide.

The third die coater 1025 may be disposed downstream of the second die coater 1023. In other words, the third die coater 1025 may be configured to process portions of the current collector sheet SS processed by the second die coater 1023. The third die coater 1025 may be interposed between the second die coater 1023 and the rewinder 1013.

The third die coater 1025 may be configured to provide insulating slurry such that insulating slurry lanes ISL are formed on the current collector sheet SS. The insulating slurry may include, for example, insulating materials, styrene butadiene rubber (SBR), binders, stabilizers, and solvents. The insulating material may include ceramic such as boehmite. The binder of the insulating slurry lanes ISL may include one of the aforementioned materials. The insulating slurry lanes ISL may be spaced apart from each other in the transverse direction TD. The insulating slurry lanes ISL may extend in the machine direction MD.

The insulating slurry lanes ISL may be applied on the active guide lanes AGL, but are not limited thereto. In some embodiments, the insulating slurry lanes ISL may include portions covering the active guide lanes AGL and portions covering the electrode slurry lane ESL. In some embodiments, the insulating slurry lanes ISL may include portions covering the active guide lanes AGL and portions covering the current collector sheet SS. In some embodiments, the insulating slurry lanes ISL may include portions covering the active guide lanes AGL, portions covering the current collector sheet SS, and portions covering the electrode slurry lane ESL. Portions of the current collector sheet SS overlapping with the insulating slurry lanes ISL and the active guide lanes AGL may be referred to as overlay areas. The overlay areas may extend in the machine direction MD.

Although the drawings show an embodiment where the first die coater 1021, the second die coater 1023, and the third die coater 1025 are sequentially arranged and operated, the technical idea of the present disclosure is not limited thereto. In some embodiments, the second die coater 1023 and the third die coater 1025 may be integrally formed or disposed parallel to the transverse direction TD of the current collector sheet SS. The second die coater 1023 may be operated simultaneously with the third die coater 1025. In other words, the second die coater 1023 and the third die coater 1025 may be configured to simultaneously process portions of the current collector sheet SS processed by the first die coater 1021. Accordingly, the electrode slurry lane ESL and the insulating slurry lanes ISL may be simultaneously applied on the current collector sheet SS.

In some embodiments, the second die coater 1023 may include a plurality of discharge ports. The second die coater 1023 may be configured to discharge different types of electrode slurries through the plurality of discharge ports respectively. Accordingly, the electrode slurry lane ESL may include two or more types of slurries. In this case, the first die coater 1021 may also include a plurality of discharge ports. For example, the first die coater 1021 may include the same number of discharge ports as the discharge ports of the second die coater 1023. However, it is not limited thereto, and when the second die coater 1023 includes a plurality of discharge ports, the first die coater 1021 may include a single discharge port.

The drying device 1027 may be disposed downstream of the third die coater 1025. In other words, the drying device 1027 may be configured to process portions of the electrode sheet ES processed by the third die coater 1025. The drying device 1027 may be interposed between the third die coater 1025 and the rewinder 1013.

The drying device 1027 may be configured to remove solvents in the active guide lanes AGL, the electrode slurry lane ESL, and the insulating slurry lanes ISL, or reduce the content of the solvents. The active material layer AL may be provided by drying the active guide lanes AGL and the electrode slurry lane ESL, and insulation layers IL may be provided by drying the insulating slurry lanes ISL. The active guide lanes AGL and the electrode slurry lane ESL may be integrated into the active material layer AL by the drying process.

The drying device 1027 may include, for example, an oven. The moisture content of the electrode sheet ES may be limited to a set numerical range by the drying device 1027. The drying device 1027 may operate based on, for example, dew point-based feedback, but is not limited thereto.

According to exemplary embodiments, as solvents evaporate in the drying process, the reduction in wet thickness of the active guide lanes AGL may be greater than the reduction in wet thickness of the electrode slurry lane ESL, and accordingly, the dry thickness of the active guide lanes AGL may be substantially identical to the dry thickness of the electrode slurry lane ESL. The active material layer AL formed by drying the active guide lanes AGL and the electrode slurry lane ESL may have uniform thickness and/or loading amount along the transverse direction. The insulation layers IL may cover edges of the active material layer AL in the transverse direction TD.

### (Second Embodiment)

FIG. 7 is a flowchart to describe a method for manufacturing a secondary battery according to exemplary embodiments.

Referring to FIG. 1, FIG. 2, FIG. 3, and FIG. 7, at P110, a first electrode slurry may be applied to the current collector sheet SS. The first electrode slurry may be provided by the first die coater 1021. By providing the first electrode slurry to the current collector sheet SS, active guide lanes AGL may be formed on the current collector sheet SS.

Referring to FIG. 1, FIG. 2, FIG. 4, and FIG. 7, at P120, a second electrode slurry may be applied to the current collector sheet SS. The second electrode slurry may be provided by the second die coater 1023. By providing the second electrode slurry to the current collector sheet SS, an electrode slurry lane ESL may be formed on the current collector sheet SS.

Referring to FIG. 1, FIG. 2, FIG. 5, and FIG. 7, at P130, insulating slurry may be applied to the current collector sheet SS. The insulating slurry may be provided by the third die coater 1025. By providing the insulating slurry to the current collector sheet SS, insulating slurry lanes ISL may be formed on the current collector sheet SS.

Referring to FIG. 1, FIG. 2, FIG. 6, and FIG. 7, at P140, a drying process may be performed. By the drying process, the active guide lanes AGL and the electrode slurry lane ESL may be integrated to provide an active material layer AL. The thickness of the active guide lanes AGL and the thickness of the electrode slurry lane ESL may be determined based on the solid content so that the active material layer AL has a constant thickness in the transverse direction TD. Here, thickness means height (or length) in the vertical direction VD.

As an example, when the ratio of the solid content of the active guide lanes AGL and the electrode slurry lane ESL is 4:7, the thickness ratio of the active guide lanes AGL and the electrode slurry lane ESL may be 7:4. In other words, the product of the wet thickness of the active guide lanes AGL and the solid content of the active guide lanes AGL may be substantially identical to the product of the wet thickness of the electrode slurry lane ESL and the solid content of the electrode slurry lane ESL. Accordingly, the dry thickness of each of the active guide lanes AGL may be substantially identical to the dry thickness of the electrode slurry lane ESL.

In some embodiments, the processes of P110, P120, P130, and P140 may be performed simultaneously but on different parts of the electrode sheet ES. Accordingly, the same part of the electrode sheet ES may undergo the processes of P110 to P140 in sequence.

In other embodiments, the processes of P120 and P130 may be performed simultaneously. In other words, after the process of P110 is performed, the processes of P120 and P130 may be performed simultaneously, and then the process of P140 may be performed.

After performing the coating process including P110 to P140, a roll pressing process, a slitting process, and a notching process may be performed. The roll pressing process may be performed by roll pressing facility including pressing rolls. Due to performing the roll pressing process, the coupling force between the surface of the electrode plate and the active materials may be strengthened. Accordingly, movement of lithium ions inside the electrode may be promoted, and the output and performance of the finally manufactured secondary battery may be enhanced.

The slitting process is a process of separating the electrode into a plurality of electrodes having a smaller width in the transverse direction. Subsequently, the electrode may be cut into a shape including tabs by the notching process.

### (Third Embodiment)

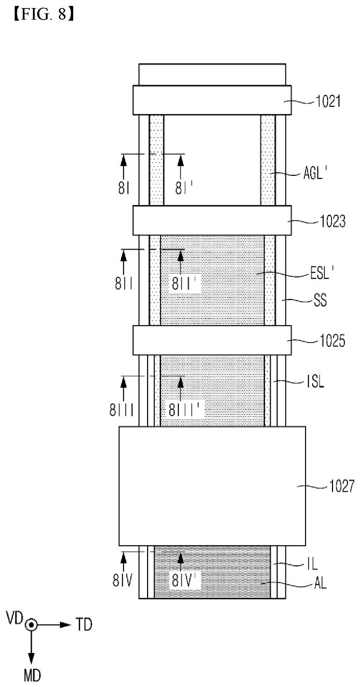

FIG. 8 is a plan view illustrating processing by a secondary battery manufacturing facility 1000 (refer to FIG. 1) according to exemplary embodiments.

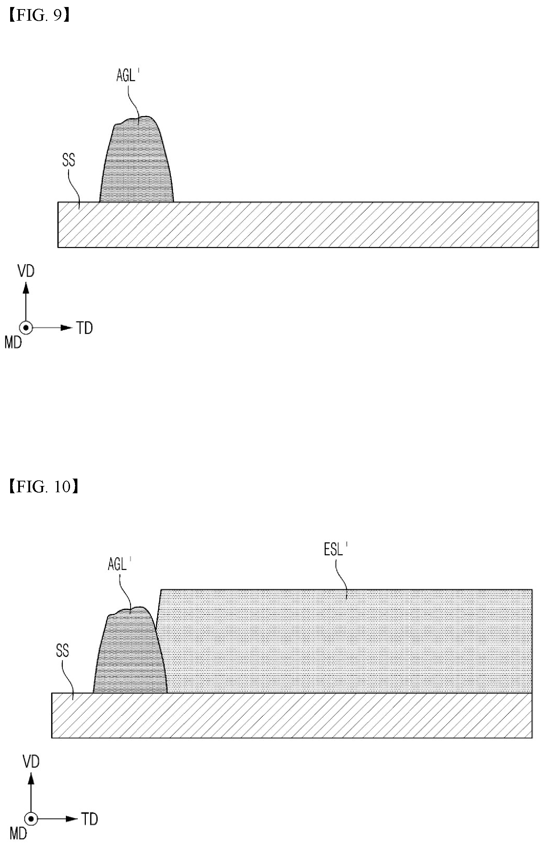

FIG. 9 is a cross-sectional view taken along the cut line 8I-8I' of FIG. 8.

FIG. 10 is a cross-sectional view taken along the cut line 8II-8II' of FIG. 8.

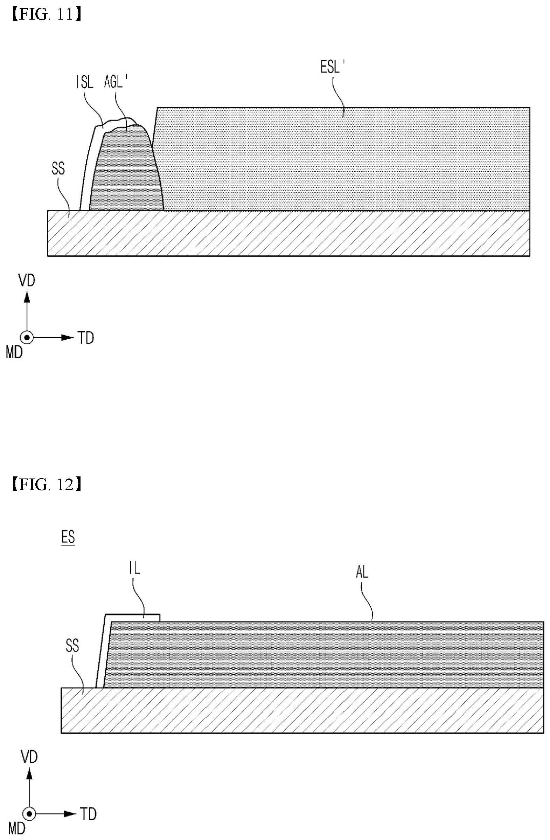

FIG. 11 is a cross-sectional view taken along the cut line 8III-8III' of FIG. 8.

FIG. 12 is a cross-sectional view taken along the cut line 8IV-8IV' of FIG. 8.

Referring to FIG. 1, FIG. 8, and FIG. 12, the die coater 1021 may provide a first electrode slurry on the current collector sheet ES. Active guide lanes AGL' may be provided by providing the first electrode slurry.

The die coater 1023 may provide a second electrode slurry on the current collector sheet ES. An electrode slurry lane ESL' may be provided by providing the second electrode slurry. The second electrode slurry is substantially identical to that described with reference to FIG. 1 to FIG. 6.

The first electrode slurry for forming the active guide lanes AGL' may be different from the second electrode slurry. The first electrode slurry may have higher solid content than the second electrode slurry. The first electrode slurry may be substantially identical to the second electrode slurry except for the solid content. In other words, the second electrode slurry may include additional solvent compared to the first electrode slurry based on the same amount of solid content.

The solid content of each of the active guide lanes AGL' may be different from the solid content of the electrode slurry lane ESL'. The solid content of each of the active guide lanes AGL' may be greater than the solid content of the electrode slurry lane ESL'.

According to exemplary embodiments, the solid content of each of the active guide lanes AGL' may be about 70% or more. According to exemplary embodiments, the solid content of each of the active guide lanes AGL' may be about 75% or more. According to exemplary embodiments, the solid content of each of the active guide lanes AGL' may be about 90% or less. According to exemplary embodiments, the solid content of each of the active guide lanes AGL' may be about 85% or less.

Due to the difference between the solid content of each of the active guide lanes AGL' and the solid content of the electrode slurry lane ESL', the active guide lanes AGL' and the electrode slurry lane ESL' may not mix with each other until the drying process by the drying device 1027 is performed.

The time taken from providing the active guide lanes AGL' and the electrode slurry lane ESL' until they are dried may be 5 minutes or less (or 2 minutes or less). Accordingly, the profile of each of the active guide lanes AGL' may be maintained identical or similar to when each of the active guide lanes AGL' was initially coated, so that slide of the electrode slurry lane ESL' can be prevented or mitigated, and the edge profile of the finally provided active material layer AL can be enhanced.

According to exemplary embodiments, the wet thickness of the electrode slurry lane ESL' may be different from the wet thickness of the active guide lanes AGL' so that active materials are uniformly provided on current collector sheet SS in the transverse direction TD. The wet thickness of the electrode slurry lane ESL' may be greater than the wet thickness of the active guide lanes AGL'.

According to exemplary embodiments, by providing the active guide lanes AGL' before coating the electrode slurry lane ESL', the profile of the electrode slurry lane ESL' can be enhanced, and accordingly, the quality of the finally manufactured electrode sheet ES can be enhanced.

The insulating slurry lanes ISL applied by the third die coater 1025 may be applied on the active guide lanes AGL'. Each of the insulating slurry lanes ISL is substantially identical to that described with reference to FIG. 1 to FIG. 6.

The solvent in the active guide lanes AGL', the electrode slurry lane ESL', and the insulating slurry lanes ISL may be removed, or the content of the solvent may be reduced by the drying device 1027, and accordingly, the active material layer AL and insulation layers IL may be provided.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. A method for manufacturing a secondary battery comprising:
applying a first electrode slurry to a current collector sheet such that active guide lanes are formed on the current collector sheet;
applying a second electrode slurry to the current collector sheet such that an electrode slurry lane is formed between the active guide lanes; and
drying the active guide lanes and the electrode slurry lane such that an active material layer is formed,
wherein a solid content of the first electrode slurry is different from a solid content of the second electrode slurry.

2. The method of claim 1, wherein the solid content of the first electrode slurry is smaller than the solid content of the second electrode slurry.

3. The method of claim 1, wherein the solid content of the first electrode slurry is greater than the solid content of the second electrode slurry.

4. The method of claim 1, wherein a wet thickness of each of the active guide lanes is different from a wet thickness of the electrode slurry lane.

5. The method of claim 1, wherein the wet thickness of each of the active guide lanes is smaller than the wet thickness of the electrode slurry lane.

6. The method of claim 1, wherein the wet thickness of each of the active guide lanes is greater than the wet thickness of the electrode slurry lane.

7. The method of claim 1, wherein the product of the wet thickness of each of the active guide lanes and the solid content of each of the active guide lanes is identical to the product of the wet thickness of the electrode slurry lane and the solid content of the electrode slurry lane.

8. The method of claim 1, further comprising applying insulating slurry to the current collector sheet such that insulating slurry lanes are formed on the active guide lanes.

9. The method of claim 1, wherein by drying the active guide lanes and the electrode slurry lane, the active guide lanes and the electrode slurry lane are integrated into the active material layer.

10. The method of claim 1, wherein a dry thickness of each of the active guide lanes is identical to a dry thickness of the electrode slurry lane.

11. The method of claim 1, wherein the time interval between formation of the active guide lanes and drying of the active guide lanes is within 2 minutes.

12. The method of claim 1, wherein:
the solid content of each of the active guide lanes is 40% or more,
the solid content of each of the active guide lanes is 60% or less,
the solid content of the electrode slurry lane is 60% or more, and
the solid content of the electrode slurry lane is 80% or less.
